# EUROPÄISCHE PATENTSCHRIFT

(11) **EP 3 514 045 B1**
(45) Veröffentlichungstag und Bekanntmachung des Hinweises auf die Patenterteilung: **09.09.2020**
(21) Anmeldenummer: 19153248.0
(22) Anmeldetag: 23.01.2019
(51) Int. Cl.: B62K 5/06, B62K 5/08, B62K 5/00, B62K 5/003

(54) **FAHRRAD**
BICYCLE
BICYCLETTE

(30) Priorität: 23.01.2018 DE 102018101387
(43) Veröffentlichungstag der Anmeldung: 24.07.2019
(73) Patentinhaber: Dolidze, Shota, 13593 Berlin (DE)
(72) Erfinder: Dolidze, Shota, 13593 Berlin (DE)
(74) Vertreter: Gulde & Partner

(56) Entgegenhaltungen:
- DE-C- 90 643
- US-A- 4 445 702
- US-A- 4 688 816
- US-A1- 2008 012 264

## Beschreibung

Die Erfindung betrifft ein Fahrrad gemäß Patentanspruch 1.

Auf dem technischen Gebiet der Fahrräder werden gleichsam Anforderungen an den Fahrkomfort sowie die Sicherheit und Langlebigkeit gestellt.

Bezüglich des Fahrkomforts ist der Ausgleich von Bodenunebenheiten und die Dämpfung damit einhergehender Schwingungen im Betrieb von essentieller Bedeutung.

Die GB 2 382 806 A offenbar beispielsweise ein dreirädriges Fahrrad, bei dem jedes Rad über die Möglichkeit Höhenunterschiede auszugleichen verfügt. Allerdings sind hierfür zusätzliche Dämpfungselemente erforderlich, die die technische Komplexität erhöhen und wartungsanfällig sind.

Die US2008012264 A1 offenbart ein dreirädriges Geländefahrrad mit drei sich folgenden Räder.

Der Erfindung liegt nun die Aufgabe zugrunde, ein alternatives Fahrrad zu schaffen, dass bei verringerter technischer Komplexität einen verbesserten Fahrkomfort aufweist und gleichzeitig robust ist.

Die Aufgabe wird durch den Gegenstand des Patentanspruchs 1 gelöst. Weitere bevorzugte Ausgestaltungen der Erfindung ergeben sich aus den übrigen, in den Unteransprüchen genannten Merkmalen und der Beschreibung.

Die Erfindung betrifft ein Fahrrad, umfassend wenigstens ein Führungsrad, ein erstes Laufrad und ein dem ersten Laufrad folgendes zweites Laufrad, einen Hauptrahmen, an dem das erste Laufrad gelagert ist, eine gegenüber dem Hauptrahmen vertikal schwenkbare Schwinge, an der das zweite Laufrad gelagert ist, eine Stützschiene, die an dem Hauptrahmen einseitig gelenkig gelagert ist und entgegen der Fahrtrichtung auskragt, wobei die Schwinge an einer Unterseite der Stützschiene mit einem Lagerelement gestützt und geführt ist, ein Sitzelement, das oberhalb der Stützschiene angeordnet ist und gegenüber der Stützschiene separat an dem Hauptrahmen einseitig gelenkig gelagert ist und das entgegen der Fahrtrichtung auskragt, wobei eine Unterseite des Sitzelements und eine Oberseite der Stützschiene zusätzlich über wenigstens zwei Gelenke und ein Bindeglied kinematisch verbunden sind.

Dieses erfinderische kinematische Prinzip des Fahrrads bietet den Vorteil, dass ein Ausgleich von Bodenunebenheiten allein auf Basis von steifen Gliedern, die über Gelenke miteinander verbunden werden, erreicht wird. Im Gegensatz zu konventionellen Lösungen sind keine separaten Stoßdämpfer erforderlich, da die durch einen unebenen Untergrund induzierte Schwingungen durch die Kinematik des Fahrrads weitgehend ausgeglichen werden können. In Bezug auf beispielsweise ein entgegen der Fahrtrichtung orientiertes Ende des Sitzelements stellt die Kinematik des Fahrrads, mit anderen Worten ausgedrückt, ein Getriebe dar, welches eine durch die Bodenunebenheit hervorgerufene Vertikalbewegung des zweiten Laufrads in eine geringere Vertikalbewegung des besagten Endes des Sitzelements übersetzt. Da all dies ohne zusätzliche Feder-Dämpfungs-Systeme, wie sie von konventionellen Fahrrädern bekannt sind, möglich ist, ist das erfindungsgemäße Fahrrad sowohl komfortabel, als auch robust und gelichzeitig von geringer Komplexität in der Herstellung.

In bevorzugter Ausgestaltung der Erfindung ist vorgesehen, dass die Schwinge ein Rückstellelement aufweist, das an der Oberseite der Stützschiene geführt ist.

Dies bietet den Vorteil, dass bei einer vertikalen Abwärtsbewegung des zweiten Laufrads die Stützschiene stets mitgenommen wird, sodass das Lagerelement stets sicher an der Stützschiene anliegt.

In weiterer bevorzugter Ausgestaltung der Erfindung ist vorgesehen, dass das Sitzelement ein Sattelelement aufweist, das in einem in Fahrtrichtung orientierten Federabschnitt federnd auf dem Sitzelement gelagert ist und in einem entgegen der Fahrtrichtung orientierten Gelenkabschnitt gelenkig an dem Sitzelement gelagert ist.

Dies erhöht zum einen den Sitzkomfort und kann zum anderen eine vertikale Verkippung des Sitzelements infolge der zumindest teilweise über das erste und zweite Laufrad übertragenden Vertikalbewegung wenigstens teilweise ausgleichen.

In weiterer bevorzugter Ausgestaltung der Erfindung ist vorgesehen, dass die Kinematik des Fahrrads derart abgestimmt ist, dass sie in Bezug auf eine Drehachse des zweiten Laufrads und den Gelenkabschnitt des Sattelelements ein Getriebe darstellt, das eine Vertikalbewegung des zweiten Laufrads in eine kleinere Vertikalbewegung des Gelenkabschnitts übersetzt.

Da der Gelenkabschnitt des Sattelelements sich bei Unebenheiten am stärksten in vertikaler Richtung verschiebt, kann dieser Bereich am vorteilhaftesten als Referenzpunkt zur Auslegung der Kinematik herangezogen werden.

Vorzugsweise bewirkt eine vertikale Verschiebung des zweiten Laufrads um 23 Längeneinheiten, höchstens eine vertikale Verschiebung des Gelenkabschnitts um 5 Längeneinheiten, sodass eine Übersetzung von 5 zu 23 realisiert wird.

Dies hat sich für übliche Betriebszustände eines Fahrrads als besonders guter Kompromiss aus Fahrdynamik und Dimensionierung der Fahrradstruktur herausgestellt.

In weiterer bevorzugter Ausgestaltung der Erfindung ist vorgesehen, dass die Stützschiene, ausgehend von ihrem Lagerpunkt am Hauptrahmen entgegen der Fahrtrichtung wenigstens einen ersten, zweiten und dritten Krümmungsbereich aufweist, wobei der zweite Krümmungsbereich die größte Krümmung aufweist.

Mit anderen Worten ausgedrückt, ist die Krümmung der Stützschiene auf eine Bewegungsbahn des Lagerelements bei vertikaler Bewegung des zweiten Laufrads hin angepasst, sodass die angestrebte Schwingungsdämpfung erreicht wird. Durch Anpassung der Gestaltung der Stützschiene lässt sich das Übersetzungsverhalten des Getriebes flexibel anpassen.

In weiterer bevorzugter Ausgestaltung der Erfindung ist vorgesehen, dass das zweite Laufrad über eine weitere Schwinge horizontal schwenkbar an der Schwinge gelagert ist.

Dies bietet insbesondere in Kurvenfahrten eine deutlich verbesserte Fahrstabilität und ermöglicht das Abfahren enger Wendekreise sowie einen besseren Ausgleich von Bodenunebenheiten in Querrichtung zum Fahrrad.

In weiterer bevorzugter Ausgestaltung der Erfindung ist vorgesehen, dass das Fahrrad zwei Führungsräder aufweist, die seitlich versetzt zu dem Hauptrahmen nach Art eines Dreirads angeordnet sind.

In dieser Ausgestaltung wird der Fahrkomfort nochmals signifikant erhöht.

In weiterer bevorzugter Ausgestaltung der Erfindung ist vorgesehen, dass eine Drehachse des zweiten Laufrads gegenüber der vertikalen Richtung einen Winkel von 19° aufweist, wenn das Fahrrad sich auf planarem Untergrund befindet.

Untersuchungen haben ergeben, dass sich unter für Fahrräder typischen Betriebsbedingungen dabei ein überraschend schwingungsarmes Verhalten in Bezug auf die erfindungsgemäße Fahrradkinematik ergibt.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Die Figuren zeigen:
- Figur 1: ein erfindungsgemäßes Fahrrad auf planarem Untergrund;
- Figur 2: das erfindungsgemäße Fahrrad aus Figur 1 mit nach oben ausgelenktem zweiten Laufrad;
- Figur 3: das erfindungsgemäße Fahrrad aus Figur 1 mit nach oben ausgelenktem ersten Laufrad; und
- Figur 4: ein erfindungsgemäßes Fahrrad in einer weiteren Ausführungsform.

Die gezeigten Ausführungsbeispiele sind in etwa maßstabsgetreu dargestellt, damit die der Erfindung zugrundeliegenden kinematischen Prinzipien zum Verständnis der Erfindung besseren aus den Skizzen ableitbar sind. Die Maßangaben stellen eine bevorzugte Dimensionierung dar, sind unter Beibehaltung des kinematischen Prinzips aber adaptierbar.

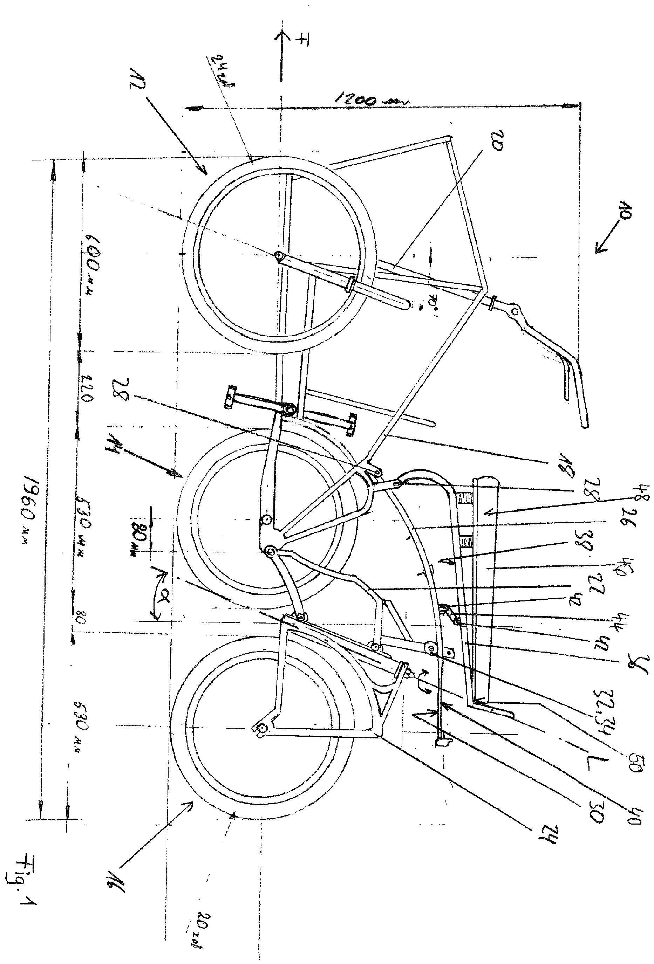

Figur 1 zeigt ein erfindungsgemäßes Fahrrad 10. Dieses weist ein Führungsrad 12, ein erstes Laufrad 14 und ein dem ersten Laufrad 14 folgendes zweites Laufrad 16 auf. Es ist ein Hauptrahmen 18 vorgesehen, an dem das erste Laufrad 14 gelagert ist. Das Führungsrad 12 ist über eine Gabel 20 konventionell an dem Hauptrahmen 18 befestigt. Weiterhin ist eine gegenüber dem Hauptrahmen 18 vertikal schwenkbare Schwinge 22 vorgesehen. An dieser ist das zweite Laufrad 16 gelagert. In dem gezeigten Beispiel ist das zweite Laufrad 16 über eine weitere Schwinge 24 an der Schwinge 22 gelagert. Es ist dabei um eine Drehachse L horizontal schwenkbar an der Schwinge 22 gelagert. In der gezeigten Betriebssituation auf ebenem Boden beträgt ein Winkel α 19°.

Weiterhin ist eine Stützschiene 26 vorgesehen. Diese ist an dem Hauptrahmen 18 einseitig gelenkig gelagert. Die Lagerung kann beispielsweise nach Art eines Scharniers 28 ausgebildet sein. Ausgehend von dem Scharnier 28 kragt die Stützschiene 26 entgegen der Fahrtrichtung F aus und erstreckt sich bis in etwa zur Mitte des zweiten Laufrads 16 oberhalb entlang dem selbigen.

Die Schwinge 22 ist dabei an einer Unterseite der Stützschiene 30 mit einem Lagerelement 32 gestützt und geführt. Das Lagerelement 32 kann beispielsweise ein Wälzkörper 34 sein.

Des Weiteren ist ein Sitzelement 36 vorgesehen, das oberhalb der Stützschiene 26 angeordnet ist. Das Sitzelement 36 ist gegenüber der Stützschiene 26 separat, also beispielsweise in einem anderen Scharnier 28, an dem Hauptrahmen 18 einseitig gelenkig gelagert. Von dort aus kragt das Sitzelement 36 entgegen der Fahrtrichtung F aus und kann sich abschnittsweise parallel zu der Stützschiene 26 erstrecken.

Eine Unterseite des Sitzelements 38 und eine Oberseite der Stützschiene 40 sind zusätzlich über zwei Gelenke 42 und ein Bindeglied 44 kinematisch verbunden.

Die Elemente Hauptrahmen 18, Schwinge 22, Stützschiene 26, Lagerelement 32 und Sitzelement 36 bilden somit in sich betrachtet ein mechanisches System mit eindeutig bestimmter Kinematik, das hinsichtlich aller in (bezogen auf die Bildebene von Figur 1) horizontal und vertikal angreifenden Kräfte ein eindeutiges kinetisches Verhalten hat.

Ferner weist das Sitzelement 36 ein Sattelelement 46 auf, das in einem in Fahrtrichtung F orientierten Federabschnitt 48 federnd auf dem Sitzelement 36 gelagert ist und das ferner in einem entgegen der Fahrtrichtung F orientierten Gelenkabschnitt 50 gelenkig an dem Sitzelement 36 gelagert ist.

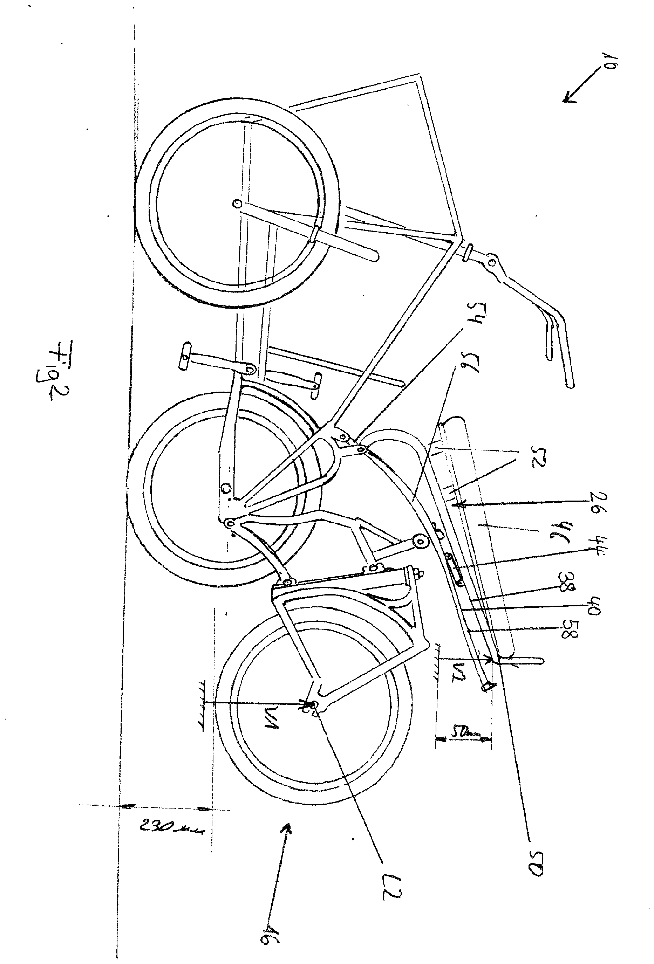

Figur 2 zeigt das Fahrrad 10 aus Figur 1 mit einem nach oben ausgelenkten zweiten Laufrad 16. Dieser Betriebszustand tritt beispielsweise auf, wenn das zweite Laufrad 16 sich gerade auf einem Bodenhindernis befindet, die übrigen Räder aber in einer Ebene angeordnet sind.

Die in Figur 1 bereits beschriebene Kinematik des Fahrrads 10 ist derart abgestimmt, dass sie in Bezug auf eine Drehachse L2 des zweiten Laufrads 16 und den Gelenkabschnitt 50 des Sattelelements 46 ein Getriebe darstellt, das eine Vertikalbewegung V1 des zweiten Laufrads 16 in eine kleinere Vertikalbewegung V2 des Gelenkabschnitts 50 übersetzt. Das Übersetzungsverhältnis in diesem Beispiel liegt bei 5 zu 23. Ein Verkippen des Sattelelements 46 kann hierbei über im Federabschnitt 48 vorgesehene Federn 52 teilweise kompensiert werden.

Die Unterseite des Sitzelements 38 und die Oberseite der Stützschiene 40 nähern sich dabei aneinander an, während sich das stützende Bindeglied 44 lokal einer Parallellage zu der Unterseite des Sitzelements 38 und der Oberseite der Stützschiene 40 annähert. Der Wälzkörper 34 verschiebt sich dabei, geführt an der Unterseite der Stützschiene 30, in Fahrtrichtung F.

Zur Erzeugung des gewünschten kinematischen Verhaltens umfasst die Stützschiene 26, ausgehend von ihrem Lagerpunkt am Hauptrahmen 18 entgegen der Fahrtrichtung F wenigstens einen ersten 54, zweiten 56 und dritten Krümmungsbereich 58 auf, wobei der zweite Krümmungsbereich 56 die größte Krümmung aufweist.

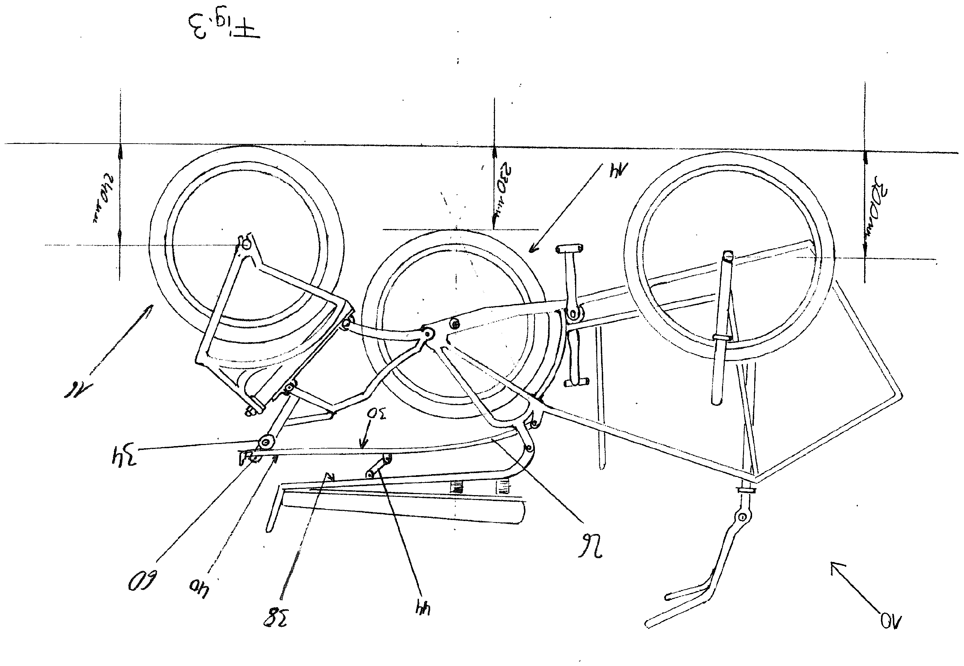

Figur 3 zeigt das Fahrrad 10 aus Figur 1 mit einem nach oben ausgelenkten ersten Laufrad 14. Dieser Betriebszustand tritt beispielsweise auf, wenn das erste Laufrad 14 sich gerade auf einem Bodenhindernis befindet, während die übrigen Räder aber in einer Ebene angeordnet sind.

Kinematisch lässt sich der gezeigte Zustand auch als Auslenkung des zweiten Laufrads 16 nach unten gegenüber dem ersten Laufrad 14 betrachten, sodass der kinematische Ablauf in umgekehrter Reihenfolge erfolgt, unter Entfernung der Unterseite des Sitzelements 38 und der Oberseite der Stützschiene 40 voneinander sowie unter einer Bewegung des stützenden Bindeglieds 44 in Richtung einer Vertikallage. Der Wälzkörper 34 verschiebt sich dabei, geführt an der Unterseite der Stützschiene 30, entgegen der Fahrtrichtung F.

Damit die Stützschiene 26 stets an dem Wälzkörper 34 anliegt, ist ein Rückstellelement 60 vorgesehen. Das Rückstellelement 60 ist mit der Schwinge 22 verbunden und überragt die Stützschiene 26 zur Herstellung eines Formschlusses an der Oberseite der Stützschiene 40. Bewegt sich das zweite Laufrad 16 nun abwärts, drückt das Rückstellelement 60 die Stützschiene 40 mit nach unten.

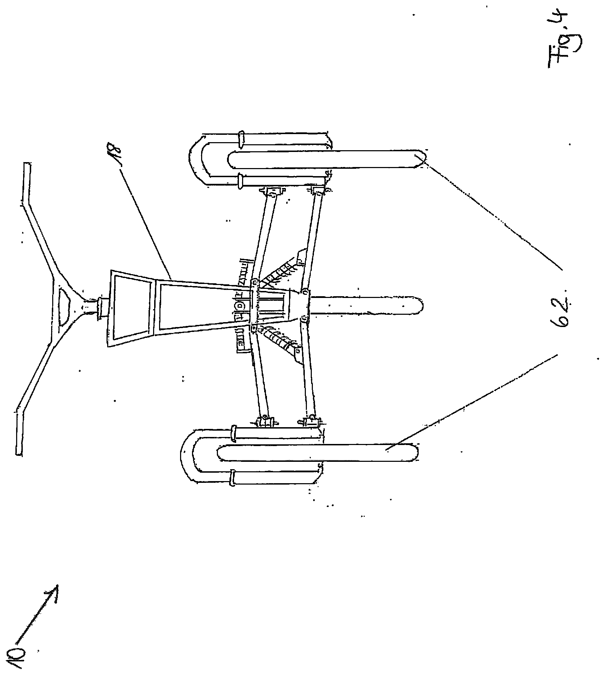

Figur 4 zeigt das Fahrrad 10 in einer abgewandelten Ausführungsform, wobei das erfinderische kinematische Grundprinzip mit den Figuren 1 bis 3 übereinstimmt.

Die gezeigte Ausführungsform des Fahrrads 10 weist zwei Führungsräder 62 auf, die seitlich versetzt zu dem Hauptrahmen 18 angeordnet sind. Es liegt also, abgesehen von dem zweiten Laufrad 16, grundsätzlich das Prinzip eines Dreirads vor.

### Bezugszeichenliste

- 10: Fahrrad
- 12: Führungsrad
- 14: erstes Laufrad
- 16: zweites Laufrad
- 18: Hauptrahmen
- 20: Gabel
- 22: Schwinge
- 24: weitere Schwinge
- 26: Stützschiene
- 28: Scharnier
- 30: Unterseite der Stützschiene
- 32: Lagerelement
- 34: Wälzkörper
- 36: Sitzelement
- 38: Unterseite des Sitzelements
- 40: Oberseite der Stützschiene
- 42: zwei Gelenke
- 44: Bindeglied
- 46: Sattelelement
- 48: Federabschnitt
- 50: Gelenkabschnitt
- 52: Federn
- 54: erster Krümmungsbereich
- 56: zweiter Krümmungsbereich
- 58: dritter Krümmungsbereich
- 60: Rückstellelement
- 62: Führungsräder

- α: Winkel
- F: Fahrtrichtung
- L: Drehachse
- L2: Drehachse
- V1: Vertikalbewegung
- V2: Vertikalbewegung

## Patentansprüche

1. Fahrrad (10), umfassend wenigstens:
- ein Führungsrad (12), ein erstes Laufrad (14) und ein dem ersten Laufrad (14) folgendes zweites Laufrad (16);
- einen Hauptrahmen (18), an dem das erste Laufrad gelagert ist;
- eine gegenüber dem Hauptrahmen vertikal schwenkbare Schwinge (22), an der das zweite Laufrad gelagert ist;
**gekennzeichnet durch**:
- eine Stützschiene (26), die an dem Hauptrahmen einseitig gelenkig gelagert ist und entgegen der Fahrtrichtung (F) auskragt, wobei die Schwinge an einer Unterseite der Stützschiene (30) mit einem Lagerelement (32) gestützt und geführt ist;
- ein Sitzelement (36), das oberhalb der Stützschiene angeordnet ist und gegenüber der Stützschiene separat an dem Hauptrahmen einseitig gelenkig gelagert ist und das entgegen der Fahrtrichtung auskragt;
- wobei eine Unterseite des Sitzelements (38) und eine Oberseite der Stützschiene (40) zusätzlich über wenigstens zwei Gelenke (42) und ein Bindeglied (44) kinematisch verbunden sind.

2. Fahrrad nach Anspruch 1,
**dadurch gekennzeichnet, dass**
die Schwinge ein Rückstellelement (60) aufweist, das an der Oberseite der Stützschiene geführt ist.

3. Fahrrad nach Anspruch 1 oder 2,
**dadurch gekennzeichnet, dass**
das Sitzelement ein Sattelelement (46) aufweist, das in einem in Fahrtrichtung orientierten Federabschnitt (48) federnd auf dem Sitzelement gelagert ist und in einem entgegen der Fahrtrichtung orientierten Gelenkabschnitt (50) gelenkig an dem Sitzelement gelagert ist.

4. Fahrrad nach Anspruch 3,
**dadurch gekennzeichnet, dass**
die Kinematik des Fahrrads derart abgestimmt ist, dass sie in Bezug auf eine Drehachse (L2) des zweiten Laufrads und den Gelenkabschnitt des Sattelelements ein Getriebe darstellt, das eine Vertikalbewegung (V1) des zweiten Laufrads in eine kleinere Vertikalbewegung (V2) des Gelenkabschnitts übersetzt.

5. Fahrrad nach einem der Ansprüche 1 bis 4,
**dadurch gekennzeichnet, dass**
die Stützschiene, ausgehend von ihrem Lagerpunkt am Hauptrahmen entgegen der Fahrtrichtung wenigstens einen ersten (54), zweiten (56) und dritten Krümmungsbereich (58) aufweist, wobei der zweite Krümmungsbereich (56) die größte Krümmung aufweist.

6. Fahrrad nach einem der Ansprüche 1 bis 5,
**dadurch gekennzeichnet, dass**
das zweite Laufrad über eine weitere Schwinge (24) horizontal schwenkbar an der Schwinge (22) gelagert ist.

7. Fahrrad nach einem der Ansprüche 1 bis 6,
**dadurch gekennzeichnet, dass**
das Fahrrad zwei Führungsräder (62) aufweist, die seitlich versetzt zu dem Hauptrahmen nach Art eines Dreirads angeordnet sind.

8. Fahrrad nach einem der Ansprüche 1 bis 7,
**dadurch gekennzeichnet, dass**
eine Drehachse (L) des zweiten Laufrads gegenüber der vertikalen Richtung einen Winkel (α) von 19° aufweist, wenn das Fahrrad sich auf planarem Untergrund befindet.

## Claims

1. A bicycle (10) comprising at least:
- a guide wheel (12), a first impeller (14), and a second impeller (16) following the first impeller (14);
- a main frame (18) on which the first impeller is mounted;
- a rocker (22), vertically pivotable opposite the main frame, on which the second impeller is mounted;
**characterized by**:
- a support rail (26) one-sidedly jointedly mounted on the main frame and cantilevered opposite the riding direction (F), wherein the rocker is supported and guided on a lower side of the support rail (30) with a mounting member (32);
- a seat member (36) arranged above the support rail and one-sidedly jointedly mounted separately on the main frame opposite the support rail and which is cantilevered against the riding direction;
- wherein a lower side of the seat member (38) and an upper side of the support rail (40) are additionally kinematically connected via at least two joints (42) and a bonding link (44).

2. The bicycle according to Claim 1,
**characterized in that**
the rocker has a restoring member (60) which is guided at the upper side of the support rail.

3. The bicycle according to Claim 1 or 2,
**characterized in that**
the seat member has a saddle member (46) which is resiliently mounted on a spring portion (48) aligned with the riding direction and which is jointedly mounted on the seat element in a joint portion (50) aligned opposite the riding direction.

4. The bicycle according to Claim 3,
**characterized in that**
the kinematics of the bicycle are coordinated such that they constitute a gear relative to a rotational axis (L2) of the second impeller and the joint portion of the saddle member, said gear translating a vertical motion (V1) of the second impeller into a smaller vertical motion (V2) of the joint portion.

5. The bicycle according to any one of Claims 1 to 4,
**characterized in that**
the support rail, seen from its mounting point on the main frame against the riding direction, has at least a first (54), second (56), and third curve region (58), wherein the second curve region (56) has the largest curvature.

6. The bicycle according to any one of Claims 1 to 5,
**characterized in that**
the second impeller is horizontally pivotably mounted on the rocker (22) above a further rocker (24).

7. The bicycle according to any one of Claims 1 to 6,
**characterized in that**
the bicycle has two guide wheels (62) arranged laterally offset from the main frame in the manner of a tricycle.

8. The bicycle according to any one of Claims 1 to 7,
**characterized in that**
a rotational axis (L) of the second impeller has an angle (α) of 19° opposite the vertical direction when the bicycle is on even ground.

## Revendications

1. Bicyclette (10) comprenant au moins :
- une roue de guidage (12), une première roue de roulement (14) et une seconde roue de roulement (16) suivant la première roue de roulement (14) ;
- un cadre principal (18), sur lequel la première roue de roulement est montée ;
- un bras oscillant (22) orientable à la verticale par rapport au cadre principal, sur lequel la seconde roue de roulement est montée ;
**caractérisée par**
- une barre d'appui (26), qui est articulée d'un côté au cadre principal et montée en porte-à-faux dans le sens contraire du déplacement (F), dans laquelle le bras oscillant est soutenu et guidé au niveau de la face inférieure de la barre d'appui (30) par un élément de palier (32) ;
- un élément d'assise (36), qui est disposé au-dessus de la barre d'appui, qui est articulé séparément d'un côté au cadre principal à l'opposé de la barre d'appui et est monté en porte-à-faux dans le sens contraire du déplacement ;
- dans laquelle une face inférieure de l'élément de selle (38) et une face supérieure de la barre d'appui (40) sont reliées cinématiquement en plus par au moins deux articulations (42) et un élément de liaison (44).

2. Bicyclette selon la revendication 1,
**caractérisée en ce que**
le bras oscillant présente un élément de rappel (60), qui est guidé au niveau de la face supérieure de la barre d'appui.

3. Bicyclette selon la revendication 1 ou 2,
**caractérisée en ce que**
l'élément d'assise présente un élément de selle (46), qui est monté sur l'élément d'assise de manière élastique dans une partie à ressorts (48) orientée dans le sens du déplacement et est articulé à l'élément d'assise dans une partie articulée (50) orientée dans le sens inverse du déplacement.

4. Bicyclette selon la revendication 3,
**caractérisée en ce que**
la cinématique de la bicyclette est coordonnée de sorte qu'elle constitue une transmission concernant un axe de rotation (L2) de la seconde roue de roulement et la partie articulée de l'élément de selle, qui démultiplie un mouvement vertical (V1) de la seconde roue de roulement en un plus petit mouvement vertical (V2) de la partie articulée.

5. Bicyclette selon l'une quelconque des revendications 1 à 4,
**caractérisée en ce que**
la barre d'appui présente au moins une première (54), une deuxième (56) et une troisième zone incurvée (58) partant de son point de montage sur le cadre principal dans le sens inverse du déplacement, dans laquelle la deuxième zone incurvée (56) présente la courbure la plus grande.

6. Bicyclette selon l'une quelconque des revendications 1 à 5,
**caractérisée en ce que**
la seconde roue de roulement est montée au-dessus d'un autre bras oscillant (24) orientable à l'horizontale sur le bras oscillant (22).

7. Bicyclette selon l'une quelconque des revendications 1 à 6,
**caractérisée en ce que**
la bicyclette présente deux roues de guidage (62), qui sont disposées latéralement en décalé par rapport au cadre principal à la manière d'un tricycle.

8. Bicyclette selon l'une quelconque des revendications 1 à 7,
**caractérisée en ce qu'**un
axe de rotation (L) de la seconde roue de roulement présente un angle (α) de 19° par rapport à la direction verticale, lorsque la bicyclette se trouve sur un sol plan.
